# EUROPEAN PATENT SPECIFICATION

(11) **EP 4 088 238 B1**
(45) Date of publication and mention of the grant of the patent: **03.07.2024**
(21) Application number: 21789254.6
(22) Date of filing: 14.04.2021
(51) Int. Cl.: G06Q 20/06, G06Q 20/20, G06Q 20/36, G06Q 20/38, G06Q 20/02, H04L 9/32, H04L 9/40, H04L 9/00

(54) **ELECTRONIC DEVICE FOR SENDING CRYPTOCURRENCY TO BLOCKCHAIN ACCOUNT AND METHOD FOR OPERATING THE SAME**
ELEKTRONISCHE VORRICHTUNG ZUM SENDEN VON KRYPTOWÄHRUNGEN AN EIN BLOCKCHAIN-KONTO UND VERFAHREN ZUM BETRIEB DERSELBEN
DISPOSITIF ÉLECTRONIQUE POUR ENVOYER UNE CRYPTOMONNAIE VERS UN COMPTE À CHAÎNE DE BLOCS ET PROCÉDÉ POUR FAIRE FONCTIONNER CELUI-CI

(30) Priority: 14.04.2020 KR 20200045142
(43) Date of publication of application: 16.11.2022
(73) Proprietor: Samsung Electronics Co., Ltd., Gyeonggi-do 16677 (KR)
(72) Inventor: LEE, Youna, Suwon-si, Gyeonggi-do 16677 (KR); KIM, Taejun, Suwon-si, Gyeonggi-do 16677 (KR); PARK, Sungjin, Suwon-si, Gyeonggi-do 16677 (KR); AN, Doyeong, Suwon-si, Gyeonggi-do 16677 (KR); JE, Seongmin, Suwon-si, Gyeonggi-do 16677 (KR)
(74) Representative: Gulde & Partner
(86) International application number: PCT/KR2021/004716
(87) International publication number: WO 2021/210918

(56) References cited:
- WO-A1-2019/189948
- WO-A1-2019/189948
- JP-A- 2020 502 651
- KR-A- 20190 093 249
- KR-A- 20190 093 249
- KR-A- 20190 124 468
- US-A1- 2020 005 283
- US-A1- 2020 051 041

## Description

### Technical Field

The disclosure relates to electronic devices for sending cryptocurrency to a blockchain address (or account) and methods for operating the same.

### Background Art

Since blockchain-based bitcoin has been made public, blockchain has applications in various sectors, such as smart contract-based platform services, cloud storage services, blockchain computing services, as well as cryptocurrency (or virtual currency) systems, e.g., bitcoin.

A blockchain platform allows system participants (nodes) to distribute and store data in their respective blocks, thus substantially free from data forgery and falsification (reliability) and allowing the participants to own their distributed information (transparency), with no need for a separate central server manager.

By the nature of the public blockchain in which all codes have been made public and anyone may use, there may be various blockchain networks (or mainnet) that have hard forked a specific blockchain network. In reality, however, the value as currency may only be possessed by the address or account used in the corresponding blockchain network. For example, an address or account used in a blockchain network hard forked from the original blockchain network may have no value in other blockchain networks. Likewise, addresses or accounts used in a hard forked blockchain network may have no value in the original blockchain network. WO 2019/189948 A1, JP 2020 502651 A and KR 2019 0093249 A are relevant pieces of prior art to understand the invention and have been cited in the EESR.

The above information is presented as background information only to assist with an understanding of the disclosure. No determination has been made, and no assertion is made, as to whether any of the above might be applicable as prior art with regard to the disclosure.

### Disclosure of Invention

### Technical Problem

The address system used in the hard forked blockchain network may be the same as the address system used in the original blockchain network. For example, since blockchain networks hard forked in Ethereum (e.g., Pebble, Klaytn) are based on Ethereum, they may have the same address system or validity check method. For this reason, if the user incorrectly selects a blockchain network in which the recipient's blockchain address does not exist in the process of selecting Pebble or Ethereum, the cryptocurrency may be transferred to the incorrectly selected blockchain network.

### Solution to Problem

According to various embodiments of the disclosure, when transmitting a cryptocurrency to a blockchain address, the electronic device may identify whether information about the corresponding blockchain address exists in the corresponding blockchain network using the unique data of the blockchain network and transfer cryptocurrency according to the result of identification.

Aspects of the disclosure are to address at least the above-mentioned problems and/or disadvantages and to provide at least the advantages described below. Accordingly, an aspect of the disclosure is to provide an electronic device electronic devices for sending cryptocurrency to a blockchain address (or account) and methods for operating the same.

Additional aspects will be set forth in part in the description which follows and, in part, will be apparent from the description, or may be learned by practice of the presented embodiments.

In accordance with an aspect of the disclosure, an electronic device is provided. The electronic device includes a memory, a communication circuit, and a processor, wherein the memory stores instructions which, when executed, cause the processor to receive a message, using the communication circuit from an external electronic device, the message including a blockchain address corresponding to a blockchain account and an identifier corresponding to at least one blockchain transaction related to the blockchain address, obtain blockchain transaction information related to the identifier from a node included in a blockchain network related to the blockchain address using the communication circuit, based on a request for remitting cryptocurrency to the blockchain address, when the blockchain transaction information obtained from the node corresponds to the blockchain address, remit the cryptocurrency to the blockchain address via the blockchain network, using the communication circuit and, when the blockchain transaction information obtained from the node does not correspond to the blockchain address, refrain from remitting the cryptocurrency to the blockchain address via the blockchain network.

In accordance with another aspect of the disclosure, a method for operating an electronic device is provided. The method includes receiving a message from an external electronic device, the message including a blockchain address corresponding to a blockchain account and an identifier corresponding to at least one blockchain transaction related to the blockchain address, obtaining blockchain transaction information related to the identifier from a node included in a blockchain network related to the blockchain address, based on a request for remitting cryptocurrency to the blockchain address, when the blockchain transaction information obtained from the node corresponds to the blockchain address, remitting the cryptocurrency to the blockchain address via the blockchain network and, when the blockchain transaction information obtained from the node does not correspond to the blockchain address, refraining from remitting the cryptocurrency to the blockchain address via the blockchain network.

In accordance with another aspect of the disclosure, a computer-readable, non-transitory recording medium storing instructions is provided. The computer-readable, non-transitory recording medium storing instructions perform receiving a message from an external electronic device, the message including a blockchain address corresponding to a blockchain account and an identifier corresponding to at least one blockchain transaction related to the blockchain address, obtaining blockchain transaction information related to the identifier from a node included in a blockchain network related to the blockchain address, based on a request for remitting cryptocurrency to the blockchain address, when the blockchain transaction information obtained from the node corresponds to the blockchain address, remitting the cryptocurrency to the blockchain address via the blockchain network and, when the blockchain transaction information obtained from the node does not correspond to the blockchain address, refraining from remitting the cryptocurrency to the blockchain address via the blockchain network.

According to various embodiments, the electronic device may identify the recipient's cryptocurrency account in the blockchain network using unique data for the blockchain network upon transmitting cryptocurrency to the recipient's cryptocurrency account, thereby preventing the sender from transmitting cryptocurrency to a cryptocurrency account in a wrong blockchain network.

Other aspects, advantages, and salient features of the disclosure will become apparent to those skilled in the art from the following detailed description, which, taken in conjunction with the annexed drawings, discloses various embodiments of the disclosure.

### Brief Description of Drawings

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a block diagram schematically illustrating an electronic system according to an embodiment of the disclosure;
FIG. 3 is a flowchart illustrating an operation of remittance to a cryptocurrency account by a first electronic device according to an embodiment of the disclosure;
FIG. 4 is a flowchart illustrating an operation of remittance to a cryptocurrency account by a first electronic device according to an embodiment of the disclosure;
FIG. 5 is a flowchart illustrating an operation of requesting remittance to a cryptocurrency account by a second electronic device according to an embodiment of the disclosure;
FIG. 6 is a data flow illustrating an operation in which a first electronic device remits to an account requested by a second electronic device according to an embodiment of the disclosure;
FIG. 7 is a data flow illustrating an operation in which a first electronic device remits to an account requested by a second electronic device according to an embodiment of the disclosure;
FIG. 8 is a data flow illustrating an operation in which a first electronic device remits to an account requested by a second electronic device according to an embodiment of the disclosure;
FIG. 9 is a view illustrating a message transmitted by a second electronic device according to an embodiment of the disclosure;
FIG. 10 is a flowchart illustrating an operation of remittance to a cryptocurrency account by a first electronic device according to an embodiment of the disclosure;
FIG. 11 is a flowchart illustrating a method for storing a cryptocurrency account by a first electronic device according to an embodiment of the disclosure;
FIG. 12 is a view illustrating a method for storing a cryptocurrency account by a first electronic device according to an embodiment of the disclosure;
FIGS. 13A and 13B are views illustrating an operation in which a second electronic device requests remittance to a cryptocurrency account according to various embodiments of the disclosure;
FIGS. 14A, 14B, 14C, 14D, 14E, and 14F are views illustrating an operation in which a first electronic device sends cryptocurrency according to various embodiments of the disclosure; and
FIGS. 15A, 15B, and 15C are views illustrating a method for storing a cryptocurrency account, where remittance has been done, by a first electronic device according to various embodiments of the disclosure.

The same reference numerals are used to represent the same elements throughout the drawings.

### Mode for the Invention

The following description with reference to the accompanying drawings is provided to assist in a comprehensive understanding of various embodiments of the disclosure as defined by the claims . It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims .

It is to be understood that the singular forms "a," "an," and "the" include plural referents unless the context clearly dictates otherwise. Thus, for example, reference to "a component surface" includes reference to one or more of such surfaces.

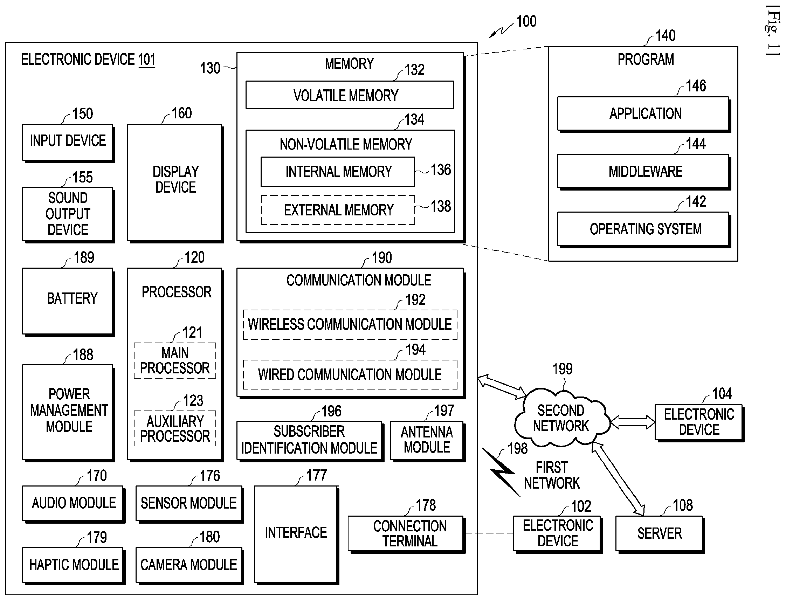

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device). According to an embodiment, the antenna module 197 may include one or more antennas, and, therefrom, at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

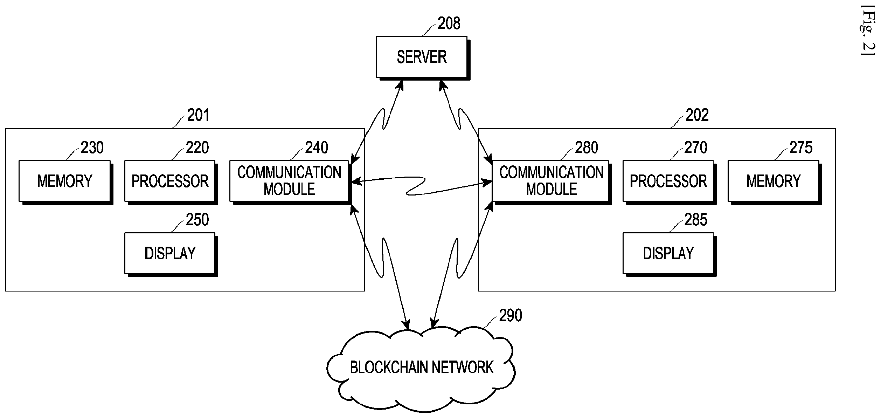

FIG. 2 is a block diagram schematically illustrating an electronic system according to an embodiment of the disclosure.

Referring to FIG. 2, an electronic system may include a first electronic device 201, a second electronic device 202, a server 208, and a blockchain network 290. For example, the first electronic device 201 and the second electronic device 202 may be implemented to be identical or at least partially similar to the electronic device 101 or 102 of FIG. 1. The server 208 may be implemented to be identical or at least partially similar to the server 108 of FIG. 1. For example, the first electronic device 201 and the second electronic device 202 may perform the function of a blockchain electronic wallet (e.g., a cold wallet).

According to an embodiment, the first electronic device 201 may transmit cryptocurrency to a designated blockchain address (or account). However, embodiments of the disclosure are not limited thereto, and the first electronic device 201 may request a transfer of cryptocurrency to a specific blockchain address (or account). For example, the blockchain address may mean an identifier that is opened for a designated user in the blockchain network 290 to access transaction information stored in the server 208 or nodes of the blockchain network 290. For example, the blockchain address (or account) may be the address corresponding to the account of cryptocurrency.

According to an embodiment, the address (or account) of the blockchain may correspond to a public key of a public key/private key pair generated through several operations from a root seed or may be generated from the public key. When a new transaction occurs, the first electronic device 201 may digitally sign the transaction data using the private key paired with the public key associated with the corresponding address (or account) and transmit it to the blockchain network 290.

According to an embodiment, remittance of cryptocurrency may be different from typical remittance from a bank account. For example, remittance of cryptocurrency may mean digitally signing transaction data including the destination address, the sending address, and remittance-related information (e.g., information about the amount of money to be transferred, the address of the smart contract handling the asset to be transferred, the quantity, and the total balance as selected) with the private key related to the sending address and recording the same in the nodes of the blockchain network.

According to an embodiment, the first electronic device 201 may include a processor 220, a memory 230, a communication module 240, and a display 250.

The processor 220 may control the overall operation of the first electronic device 201. For example, the processor 220 may be implemented to be identical or at least partially similar to the processor 120 of FIG. 1.

According to an embodiment, the processor 220 may execute a blockchain wallet application. For example, the processor 220 may execute a blockchain wallet application to identify or manage blockchain address (or account) information according to the user's input. For example, the blockchain wallet application may be stored in the memory 230.

According to an embodiment, the blockchain wallet application may access the user's cryptocurrency (virtual currency or coins) and perform operations, such as key and address management, balance check, and transaction creation and signing for transactions. According to an embodiment, the user's cryptocurrency may be recorded on the blockchain network 290 by the nodes attending through the blockchain network 290. The blockchain wallet application may include a private key and public keys for generating transactions to be included (or recorded) in the blockchain network 290. The user may send and receive the user's cryptocurrency (virtual currency or coins) by signing the transaction with the user's private key through the blockchain wallet application. For example, a node attending through the blockchain network 290 may play a role to transmit transactions in the blockchain network 290 to an electronic device included in the blockchain network 290. The electronic devices 101 and 102 of FIG. 1 and the electronic devices 201 and 202 of FIG. 2 may be the same or at least partially similar but, without limitations thereto, may be implemented as some computer or system components (e.g., a processor or memory). Further, the blockchain network 290 may use the mobile edge computing technology of 5G communication technology, and a node of the blockchain network 290 may be implemented as a mobile edge computing server. For example, creating or generating a transaction may mean digitally signing transaction data using a private key.

At least part of the operation of the processor 220 to control the first electronic device 201 described below may be performed by the blockchain wallet application.

According to an embodiment, the processor 220 may receive a message including the blockchain address (or account) and identification data for identifying the blockchain network where the blockchain address (or account) exists from an external electronic device (e.g., the second electronic device 202 or the server 208) through the communication module 240 (e.g., the communication module 190 of FIG. 1). For example, the message may include information requesting a remittance to a designated blockchain address (or account). For example, the identification data may be unique data of a designated blockchain network. For example, the identification data may include information about the transaction ID indicating information about a transaction of the blockchain address (or account), which is performed in a designated blockchain network or the latest block number (e.g., the number of the latest block generated) of the blockchain address (or account). For example, the message includes a short message service (SMS) message.

According to an embodiment, the processor 220 may identify the blockchain network of the corresponding blockchain address (or account) before transmitting the cryptocurrency to the blockchain address (or account) included in the message. For example, the processor 220 may access at least one blockchain network related to the blockchain address (or account) through the communication module 240. For example, the processor 220 may access the blockchain network included in the message received from the external electronic device. For example, when the network corresponding to the blockchain address (or account) in the message is designated as an Ethereum blockchain network, the processor 220 may access the Ethereum blockchain network. Or, the processor 220 may access at least one blockchain network related to the address of the blockchain address (or account). In this case, the processor 220 may analyze the address of the blockchain address (or account) and access at least one blockchain network using the format of the address. For example, when the address of the blockchain address (or account) is an Ethereum-based address, the processor 220 may access an Ethereum network and at least one blockchain network (e.g., Ethereum Classic, Klaytn, EOS, Pebble) hard forked based on Ethereum.

According to an embodiment, the processor 220 may identify or obtain information indicated by the identification data through a node included in at least one accessed blockchain network. For example, the processor 220 may identify or obtain the transaction information corresponding to the transaction ID and identify whether the transaction information matches information about the blockchain address (or account) included in the message. In this case, the transaction information may be transaction data recorded in the node of the blockchain network 290 indicated by the transaction ID. For example, the processor 220 may identify whether the blockchain address (or account) included in the message exists in the transaction information. Alternatively, the processor 220 may identify or obtain the latest block number and identify whether the block number matches the block number included in the message.

According to an embodiment, when the information (e.g., transaction information or block number) indicated by the identification data matches the information about the blockchain address (or account) included in the message, the processor 220 may send cryptocurrency to the corresponding blockchain address (or account). In another embodiment, if the information (e.g., transaction information or block number) indicated by the identification data does not match the information about the blockchain address (or account) included in the message, the processor 220 may not send cryptocurrency to the corresponding blockchain address (or account).

According to an embodiment, the processor 220 may fail to obtain information indicated by the identification data through a node included in at least one accessed blockchain network. In this case, the processor 220 may not transfer the cryptocurrency to the corresponding blockchain address (or account).

According to an embodiment, the processor 220 may receive an authentication value for identifying a blockchain network in which the blockchain address (or account) exists, together with the identification data, through the message received from the external electronic device. For example, the authentication value may be generated by the electronic device (e.g., the second electronic device 202) that transmits the message. For example, the authentication value may be a value obtained using transaction information for the blockchain address (or account) indicated by the identification data and the blockchain address (or account). For example, the authentication value may include at least part of a value obtained by hashing the transaction information for the blockchain address (or account) indicated by the identification data and the blockchain address (or account).

According to an embodiment, the processor 220 may obtain the transaction information indicated by the identification data from a node included in a designated blockchain network using the identification data. The processor 220 may generate a first value using the transaction information indicated by the identification data and the blockchain address (or account) included in the message. In this case, the first value may be obtained by the same method as generating the authentication value. For example, the first value may include at least part of a value obtained by hashing the transaction information for the blockchain address (or account) indicated by the identification data and the blockchain address (or account) included in the message.

According to an embodiment, the processor 220 may compare the authentication value included in the message with the generated first value and determine whether to send the cryptocurrency according to the result of comparison. For example, when the authentication value and the first value match, the processor 220 may transfer the cryptocurrency through a designated blockchain network. In another embodiment, when the authentication value and the first value do not match, the processor 220 may not remit the cryptocurrency through a specific blockchain network. For example, the processor 220 may provide, through the display 250, a notification requesting to identify the blockchain network transmitting cryptocurrency. Further, the processor 220 may transmit a message to the server 208 or the second electronic device 202 to indicate that the remittance of cryptocurrency has not been normally completed.

According to an embodiment, the processor 220 may store information related to a blockchain function in the memory 230. The processor 220 may store at least part of the information related to the blockchain function in a secure area of the memory 230. For example, the information (e.g., root seed) related to a blockchain address (or account) may be stored in the secure area of the memory 230. For example, the memory 230 may be implemented to be substantially the same or at least partially similar to the memory 130 of FIG. 1. According to an embodiment, the processor 220 may store the information (e.g., root seed) related to the blockchain address (or account) in an external memory (not shown) of the first electronic device 201 (or an external electronic device). For example, the secure area may be a partial area of the memory (e.g., the memory 130 of FIG. 1) divided into a physical area and/or a logical area and configured to be accessed only by an authorized process. For example, the secure area may include a TrustZone.

According to an embodiment, the processor 220 may display, through the display 250, information about the account obtained from the blockchain network 290 (e.g., information about the blockchain address (or account)). For example, the processor 220 may display at least one of the balance of the blockchain address (or account), transaction details (e.g., remittance and deposit details), transaction time, and number of transactions (e.g., number of remittances and/or deposits)). Alternatively, the processor 220 may display a user interface for remitting or depositing cryptocurrency to the blockchain address (or account) through the display 250. For example, the display 250 may be implemented to be substantially the same or at least partially similar to the display device 160 of FIG. 1.

According to an embodiment, the server 208 may store and manage information about the blockchain addresses (or accounts) of the first electronic device 201 and the second electronic device 202. For example, the first electronic device 201 and the second electronic device 202 may access the server 208 and store information about the blockchain address (or account) in the server 208. Alternatively, the first electronic device 201 and the second electronic device 202 may receive the information about the blockchain address (or account) from the server 208.

According to an embodiment, the first electronic device 201 may transmit and receive data to/from the second electronic device 202 via the server 208. The second electronic device 202 may also transmit and receive data to/from the first electronic device 201 via the server 208. For example, the second electronic device 202 may send a request for remittance of cryptocurrency to the first electronic device 201 via the server 208. The first electronic device 201 may transmit a message indicating that the remittance of cryptocurrency has been completed to the second electronic device 202 via the server 208. Alternatively, the first electronic device 201 may transmit a message indicating that the remittance of cryptocurrency has not been normally completed to the second electronic device 202 via the server 208.

According to an embodiment, the second electronic device 202 may include a processor 270, a memory 275, a communication module 280, and a display 285. For example, the second electronic device 202 may be implemented to be identical or similar to the first electronic device 201.

According to an embodiment of the disclosure, the processor 270 may control the overall operation of the second electronic device 202. The processor 270 may be implemented in substantially the same or at least partially similar to the processor 120 of FIG. 1.

According to an embodiment, the processor 270 may execute a blockchain wallet application. For example, the processor 270 may execute a blockchain wallet application to identify or manage blockchain address (or account) information according to the user's input. For example, the blockchain wallet application may be stored in the memory 275 (e.g., the memory 130 of FIG. 1).

According to an embodiment, the blockchain wallet application may access the user's cryptocurrency (virtual currency or coins) using the communication module 280 (e.g., the communication module 190 of FIG. 1) and perform operations, such as key and address management, balance check, and transaction creation and signing for transactions. According to an embodiment, the user's cryptocurrency may be recorded on the blockchain network 290 by the nodes attending through the blockchain network 290. The blockchain wallet application may include a private key and public keys for generating transactions to be included (or recorded) in the blockchain network 290. The user may send and receive the user's cryptocurrency (virtual currency or coins) by signing the transaction with the user's private key through the blockchain wallet application. At least part of the operation of the processor 270 to control the second electronic device 202 described below may be performed by the blockchain wallet application.

According to an embodiment, the processor 270 may send a request for remittance of cryptocurrency to the blockchain address (or account) to an external electronic device (e.g., the server 208 or the first electronic device 201) using the communication module 280. The processor 270 may generate a message for requesting the remittance of cryptocurrency and transmit the generated message to the external electronic device (e.g., the server 208) or the first electronic device 201. For example, the message may include the blockchain address (or account) to which the remittance is made and identification information for the blockchain network corresponding to the blockchain address (or account). For example, the message may include JSON data. The identification data may be information that may distinguish a specific blockchain network from the others. For example, the identification data may include information about the transaction ID (tx_id) indicating information about a transaction of the blockchain address (or account), which is performed in a specific blockchain network or the latest block number (e.g., the number of the latest block generated) of the specific blockchain network.

According to an embodiment, the processor 270 may generate an authentication value using information (transaction information or latest block number) indicated by the identification data and the blockchain address (or account). For example, the processor 270 may hash the information (transaction information or latest block number) indicated by the identification data and the blockchain address (or account) and include at least some of the hashed values in the authentication value. The processor 270 may further include an authentication value for remittance in the message. For example, the processor 270 may transmit a message including the blockchain address (or account), identification data, and authentication value to an external electronic device. Additionally, the processor 270 may transmit at least one of the name of the blockchain network, the contract address (e.g., smart contract address) to be used for mutual verification, the custom value necessary for remittance, and token, to the external electronic device via the message.

According to an embodiment, the processor 270 may store information related to a blockchain function in the memory 275.

According to an embodiment, the processor 270 may display, through the display 285 (e.g., the display device 160 of FIG. 1), information about the account obtained from the blockchain network 290 (e.g., information about the blockchain address (or account)). For example, the processor 270 may display at least one of the balance of the blockchain address (or account), transaction details (e.g., remittance and deposit details), transaction time, and number of transactions (e.g., number of remittances and/ or deposits)). Alternatively, the processor 270 may display a user interface for remitting or depositing cryptocurrency to the blockchain address (or account) through the display 285. For example, the display 285 may be implemented to be substantially the same or at least partially similar to the display device 160 of FIG. 1.

Although the first electronic device 201 is described as the operating entity in the following description of the flowcharts, at least some of the operations performed by the first electronic device 201 may be performed by the processor 220.

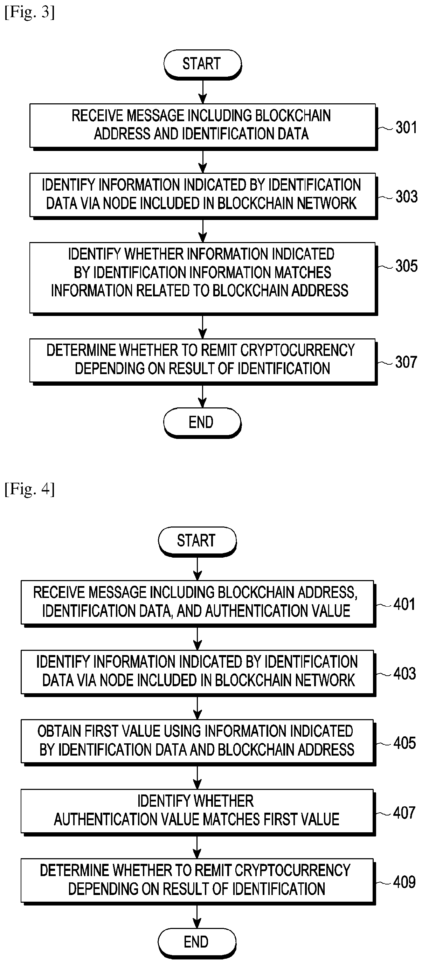

FIG. 3 is a flowchart illustrating an operation of remittance to a cryptocurrency account by a first electronic device according to an embodiment of the disclosure.

Referring to FIG. 3, in operation 301, the first electronic device 201 may receive a message including identification data and a blockchain address (or account) from an external electronic device (e.g., the second electronic device 202 or the server 208).

According to an embodiment, in operation 303, the first electronic device 201 may access a blockchain network associated with the blockchain address (or account) and identify the information indicated by the identification data via a node included in the accessed blockchain network. For example, the information indicated by the identification data may be transaction data indicated by a transaction ID recorded in the node of the blockchain network.

According to an embodiment, in operation 305, the first electronic device 201 may identify whether the information (transaction data indicated by the transaction ID) indicated by the identification data matches information related to the blockchain address (or account). For example, the first electronic device 201 may identify whether the transaction data includes data related to the blockchain address (or account) included in the message.

According to an embodiment, in operation 307, the first electronic device 201 may determine whether to send the cryptocurrency through the corresponding blockchain network, according to the result of identification. For example, when the information indicated by the identification data matches the information related to the blockchain address (or account), the first electronic device 201 may transfer cryptocurrency through the corresponding blockchain network. When the information indicated by the identification data does not match the information related to the blockchain address (or account), the first electronic device 201 may not remit the cryptocurrency through the corresponding blockchain network.

FIG. 4 is a flowchart illustrating an operation of remittance to a cryptocurrency account by a first electronic device according to an embodiment of the disclosure.

Referring to FIG. 4, in operation 401, the first electronic device 201 may receive a message including a blockchain address (or account), identification data, and authentication value from an external electronic device (e.g., the second electronic device 202 or the server 208).

According to an embodiment, in operation 403, the first electronic device 201 may access a blockchain network associated with the blockchain address (or account) and identify the information indicated by the identification data via a node included in the accessed blockchain network. For example, the information indicated by the identification data may be transaction data indicated by a transaction ID recorded in the node of the blockchain network.

According to an embodiment, in operation 405, the first electronic device 201 may obtain or generate a first value using information (e.g., the transaction data indicated by the transaction ID) indicated by the identification data and the blockchain address (or account).

According to an embodiment, in operation 407, the first electronic device 201 may identify whether the authentication value included in the message matches the first value.

According to an embodiment, in operation 409, the first electronic device 201 may determine whether to send the cryptocurrency through the corresponding blockchain network, according to the result of identification. For example, when the authentication value and the first value match, the processor 220 may transfer the cryptocurrency through the corresponding blockchain network. In contrast, when the authentication value and the first value do not match, the processor 220 may not remit the cryptocurrency through the corresponding blockchain network.

At least some of the operations performed by the second electronic device 202 may be performed by the processor 270. However, for convenience of description, the operating entity is assumed to be the second electronic device 202 in the following description.

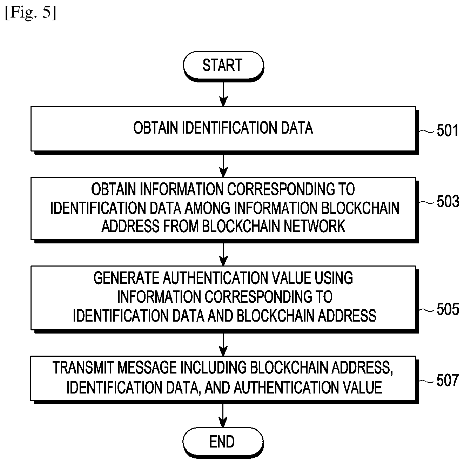

FIG. 5 is a flowchart illustrating an operation of requesting remittance to a cryptocurrency account by a second electronic device according to an embodiment of the disclosure.

Referring to FIG. 5, in operation 501, the second electronic device 202 may obtain identification data of the blockchain network 290 corresponding to the blockchain address (or account). For example, the second electronic device 202 may obtain a transaction ID of transaction data recorded in a specific block included in the blockchain network 290. In this case, the transaction ID may be stored in the memory 275. When the transaction ID is not stored in the memory 275, the second electronic device 202 may create a new transaction in the blockchain network 290 and obtain the transaction ID of the created transaction data.

According to an embodiment, in operation 503, the second electronic device 202 may obtain information corresponding to identification data among information about the blockchain address (or account) from the blockchain network 290. For example, the second electronic device 202 may send a request for transaction data indicated by a specific transaction ID to the blockchain network and obtain transaction data indicated by the specific transaction ID.

According to an embodiment, in operation 505, the second electronic device 202 may generate an authentication value using information corresponding to the identification data and the blockchain address (or account).

According to an embodiment, in operation 507, the second electronic device 202 may generate a message including the blockchain address (or account), identification data, and authentication value and transmit the generated message to an external electronic device (e.g., the first electronic device 201 or the server 208).

Alternatively, the second electronic device may not generate an authentication value and may transmit a message including the blockchain address (or account) and identification data to the external electronic device (e.g., the first electronic device 201 or the server 208).

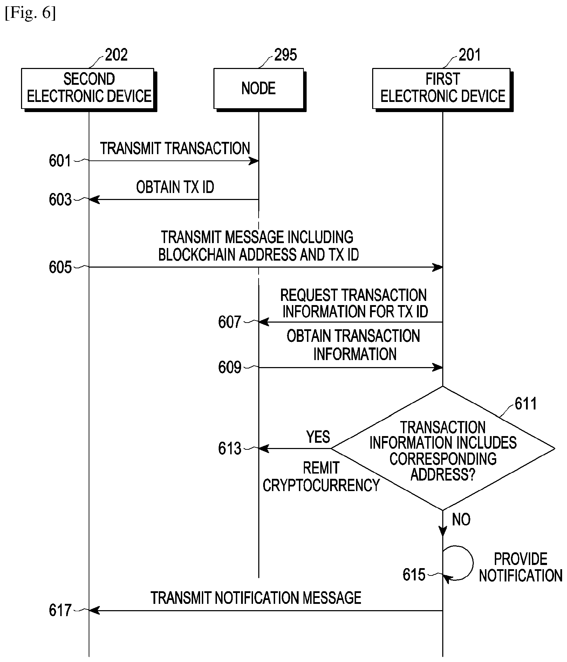

FIG. 6 is a data flow illustrating an operation in which a first electronic device remits to an account requested by a second electronic device according to an embodiment of the disclosure.

Referring to FIG. 6, the second electronic device 202 may obtain identification data recorded in a specific block from a node 295 included in the blockchain network corresponding to the blockchain address (or account) so as to request remittance to the blockchain address (or account). For example, in operation 601, when the transaction ID (tx id) is not stored in the memory 275, the second electronic device 202 may transmit a new transaction to the blockchain network 290. In operation 603, the second electronic device 202 may obtain the transaction ID (tx id) of the transaction data generated in the node 295 due to transmission of transaction. For example, the second electronic device 202 may generate a transaction using an application programming interface (API) and obtain a transaction ID. For example, the transaction ID may be generated using various data related to a blockchain transaction. For example, the various data (e.g., transaction data) may be generated using software version information, the number of input values, a hash value or sequence values generated from the data of the prior transaction. According to an embodiment, the second electronic device 202 or a device included in a blockchain network may decode the transaction-related data into a hex value and generate a hash value using a hash function (e.g., SHA 256) on the decoded value. The second electronic device 202 or the device included in the blockchain network may generate the transaction ID by encoding the generated hash value. Methods for generating a transaction ID are not limited to what has been described herein but a transaction ID may rather be generated by other various methods depending on the kind or characteristics of the blockchain. The transaction ID may be generated by the second electronic device 202 or the blockchain network.

According to an embodiment, when there is a transaction for the blockchain address (or account) previously generated, the second electronic device 202 may not generate a transaction for the node 295. The second electronic device 202 may obtain the transaction ID (tx id) from the memory 275 without performing operations 601 and 603. Alternatively, the second electronic device 202 may obtain the transaction ID (tx id) from a server (e.g., the server 208 of FIG. 2) without performing operations 601 and 603.

According to an embodiment, in operation 605, the second electronic device 202 may transmit a message including the transaction ID (tx id) and the blockchain address (or account) to the first electronic device 201 so as to request remittance for the blockchain address (or account). For example, the second electronic device 202 may transmit the message to the first electronic device 201 via the server (e.g., the server 208 of FIG. 2). Alternatively, the second electronic device 202 may directly transmit the message to the first electronic device 201 without passing through the server 208.

According to an embodiment, in operation 607, the first electronic device 201 may send a request for transaction information (or transaction data) for the transaction ID (tx id) included in the message to the node 295 included in the blockchain network of the blockchain address (or account).

According to an embodiment, in operation 609, the first electronic device 201 may obtain transaction information (or transaction data) indicated by the transaction ID (tx id) from the node 295. For example, the first electronic device 201 may obtain the transaction data corresponding to the number indicated by the transaction ID (tx id) among the whole transaction data stored in the node 295.

According to an embodiment, in operation 611, the first electronic device 201 may identify whether information related to the blockchain address (or account) included in the message is present in the transaction information (or transaction data) indicated by the transaction ID.

According to an embodiment, in operation 613, when the corresponding blockchain address (or account) is present in the transaction information (or transaction data) indicated by the transaction ID (tx id) (yes in 611), the first electronic device 201 may remit cryptocurrency to the corresponding blockchain address (or account) through the node 295 of the blockchain network.

According to an embodiment, in operation 615, when the blockchain address (or account) is not present in the transaction information (or transaction data) indicated by the transaction ID (tx id) (no in 611), the first electronic device 201 may not transmit cryptocurrency through the blockchain network but provide a notification requesting to identify (or reidentify) the blockchain network transmitting cryptocurrency. In operation 617, the first electronic device 201 may transmit a notification message indicating that the remittance of cryptocurrency has not been normally completed to the second electronic device 202 or the server 208. According to an embodiment, the first electronic device 201 may not perform operations 615 and 617.

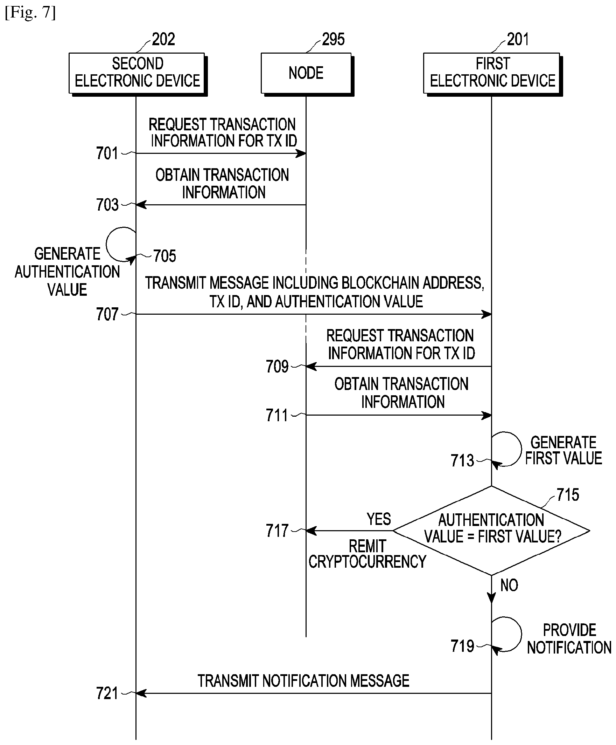

FIG. 7 is a data flow illustrating an operation in which a first electronic device remits to an account requested by a second electronic device according to an embodiment of the disclosure.

Referring to FIG. 7, according to an embodiment, in operation 701, the second electronic device 202 may send a request for transaction information (or transaction data) indicated by the transaction ID (tx id) to the node 295 of the blockchain network using the transaction ID (tx id) stored in the memory 275. In operation 703, the second electronic device 202 may obtain the transaction information (or transaction data) indicated by the transaction ID (tx id) among the whole transaction information (or whole transaction data) from the node 295. Alternatively, the second electronic device 202 may obtain the transaction ID (tx id) from a server (e.g., the server 208 of FIG. 2). According to an embodiment, when the transaction ID (tx id) is not stored in the memory 275 or the server 208, the second electronic device 202 may transmit the transaction to the blockchain network 290 and obtain the transaction ID (tx id) of the transaction data from the node 295 as in operations 601 and 603 of FIG. 6.

According to an embodiment, in operation 705, the second electronic device 202 may generate an authentication value using the transaction information (or transaction data) indicated by the transaction ID (tx id) and the blockchain address (or account). For example, the second electronic device 202 may generate a value obtained by hashing the transaction information (or transaction data) indicated by the transaction ID (tx id) and the blockchain address (or account) or at least part (e.g., the first four digits of the hashed value) of the hashed value, as the authentication value.

According to an embodiment, in operation 707, the second electronic device 202 may transmit a message including the transaction ID (tx id), the blockchain address (or account), and the authentication value to the first electronic device 201 so as to request remittance for the blockchain address (or account). For example, the second electronic device 202 may transmit the message to the first electronic device 201 via the server 208. Alternatively, the second electronic device 202 may directly transmit the message to the first electronic device 201 without passing through the server 208.

According to an embodiment, in operation 709, the first electronic device 201 may send a request for transaction information (or transaction data) for the transaction ID (tx id) included in the message to the node 295 included in the blockchain network of the blockchain address (or account).

According to an embodiment, in operation 711, the first electronic device 201 may obtain transaction information (or transaction data) indicated by the transaction ID (tx id) from the node 295. For example, the first electronic device 201 may obtain the transaction data corresponding to the number indicated by the transaction ID (tx id) among the whole transaction data stored in the node 295.

According to an embodiment, in operation 713, the first electronic device 201 may generate a first value using the transaction information (or transaction data) obtained from the node 295 and the blockchain address (or account). For example, the first electronic device 201 may generate the first value in the same manner as the second electronic device 202 generates the authentication value. For example, the first electronic device 201 may generate at least part of the value obtained by hashing the transaction information (or transaction data) obtained from the node 295 and the blockchain address (or account) as the first value.

According to an embodiment, in operation 715, the first electronic device 201 may identify whether the authentication value matches the first value.

According to an embodiment, in operation 717, when the authentication value matches the first value (yes in 715), the first electronic device 201 may remit cryptocurrency to the blockchain address (or account) through the node 295 of the blockchain network.

According to an embodiment, in operation 719, when the authentication value does not match the first value (no in 715), the first electronic device 201 may not transmit cryptocurrency through the blockchain network but provide a notification requesting to identify (or reidentify) the blockchain network transmitting cryptocurrency. In operation 721, the first electronic device 201 may transmit a notification message indicating that the remittance of cryptocurrency has not been normally completed to the second electronic device 202 or the server 208.

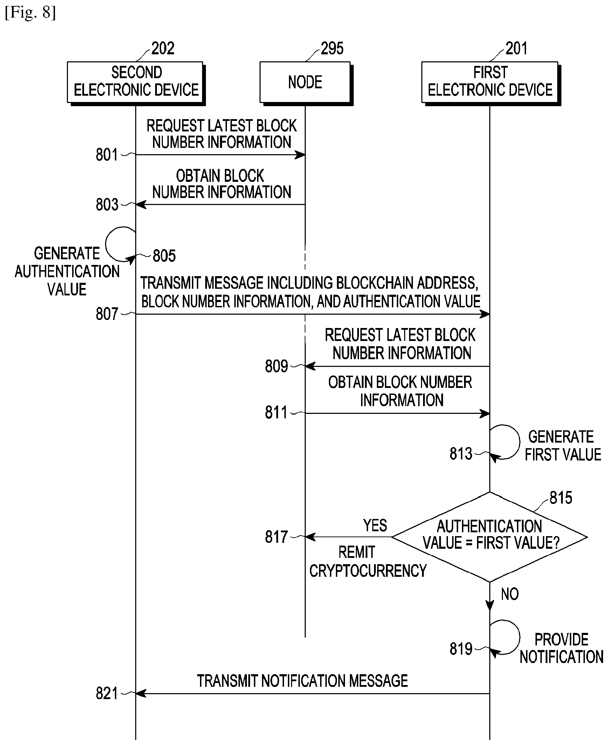

FIG. 8 is a data flow illustrating an operation in which a first electronic device remits to an account requested by a second electronic device according to an embodiment of the disclosure.

Referring to FIG. 8, in operation 801, the second electronic device 202 may send a request for the latest block number information to the node 295 of the blockchain network so as to request remittance to the blockchain address (or account). In operation 803, the second electronic device 202 may obtain the block number information for the latest block generated, from the node 295. For example, the block number information may include at least one of the block number of the latest block generated and the time of generation of the block.

According to an embodiment, when the latest block number information is stored in a memory (e.g., the memory 275 of FIG. 2) or a server (e.g., the server 208 of FIG. 2), the second electronic device 202 may not obtain the block number information from the node 295. For example, the second electronic device 202 may obtain the block number information from the memory 275 or the server 208 without performing operations 801 and 803.

According to an embodiment, in operation 805, the second electronic device 202 may generate an authentication value using the blockchain address (or account) and the block number information. For example, the second electronic device 202 may generate at least part of a value obtained by hashing the blockchain address (or account) and the block number information as the authentication value.

According to an embodiment, in operation 807, the second electronic device 202 may transmit a message including the blockchain address (or account), the block number, and the authentication value to the first electronic device 201 so as to request remittance for the blockchain address (or account). For example, the second electronic device 202 may transmit the message to the first electronic device 201 via the server 208. Alternatively, the second electronic device 202 may directly transmit the message to the first electronic device 201 without passing through the server 208.

According to an embodiment, in operation 809, the first electronic device 201 may send a request for block number information for the block number included in the message to the node 295 included in the blockchain network of the blockchain address (or account).

According to an embodiment, in operation 811, the first electronic device 201 may obtain the block number information indicated by the block number from the node 295.

According to an embodiment, in operation 813, the first electronic device 201 may generate a first value using the blockchain address (or account) and the block number information (e.g., the block number and the time of generation of the block) obtained from the node 295. For example, the first electronic device 201 may generate the first value in the same manner as the second electronic device 202 generates the authentication value. For example, the first electronic device 201 may generate at least part of a value obtained by hashing the block number information obtained from the node 295 and the blockchain address (or account) as the first value.

According to an embodiment, in operation 815, the first electronic device 201 may identify whether the authentication value matches the first value.

According to an embodiment, in operation 817, when the authentication value matches the first value (yes in operation 815), the first electronic device 201 may remit cryptocurrency to the blockchain address (or account) through the node 295 of the blockchain network.

According to an embodiment, in operation 819, when the authentication value does not match the first value (no in operation 815), the first electronic device 201 may not transmit cryptocurrency through the blockchain network but provide a notification requesting to identify (or reidentify) the blockchain network transmitting cryptocurrency. In operation 821, the first electronic device 201 may transmit a notification message indicating that the remittance of cryptocurrency has not been normally completed to the second electronic device 202 or the server 208. According to an embodiment, the first electronic device 201 may not perform operations 819 and 821.

According to an embodiment, the second electronic device 202 may refrain from generating an authentication value using the block number information and transmit a message without an authentication value to the first electronic device 201. In this case, the first electronic device 201 may identify whether the block number included in the message exists in the node 295 and, according to a result of the identification, transmit cryptocurrency to the blockchain address (or account) through the node 295 of the blockchain network.

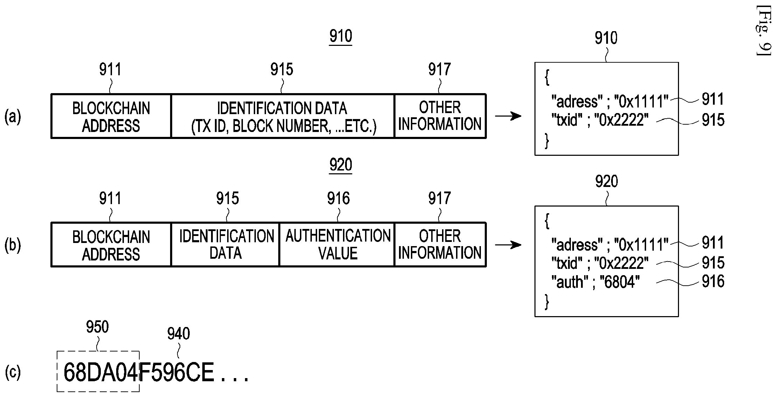

FIG. 9 is a view illustrating a message transmitted by a second electronic device according to an embodiment of the disclosure.

Referring to FIG. 9, according to an embodiment, the second electronic device 202 may generate a message 910 in the form shown in (a) of FIG. 9, in the embodiment of FIG. 6. For example, the message 910 may include a blockchain address (or account) 911, identification data 915, and other information 917. The blockchain address (or account) 911 may include information about the blockchain address. The identification data 915 may include unique data of the blockchain network and may include a transaction ID (tx id) or a block number. The other information 917 may include at least one of the name of the blockchain network, a contract address (e.g., smart contract address) to be used for mutual verification, a custom value required for remittance, and a token. However, the message 910 may not include the other information 917. For example, the message 910 may include JSON data including an "address" and a "tx id". The second electronic device 202 may transmit the generated message 910 to the first electronic device 201.

According to an embodiment, the second electronic device 202 may generate a message 920 in the form shown in (b) of FIG. 9, in the embodiment of FIGS. 7 and 8. For example, the message 920 illustrated in (b) of FIG. 9 may further include an authentication value 916 in the message 910 illustrated in (a) of FIG. 9. For example, the second electronic device 202 may generate a first value 940 by hashing the identification data and the blockchain address (or account) as illustrated in (c) of FIG. 9. The second electronic device 202 may generate at least part of the first value 940 as the authentication value. For example, the second electronic device 202 may generate four digits (e.g., '6804') included in the upper portion 950 of the first value 940 as the authentication value. Alternatively, the second electronic device 202 may generate four letters (e.g., '68DA') included in the upper portion 950 as the authentication value. For example, the message 920 may include JSON data including an "address," a "tx id," and an "auth". The second electronic device 202 may transmit the generated message 920 to the first electronic device 201.

The message shown in FIG. 9 is merely an example, and the type of the data or the data included in the message is not limited thereto.

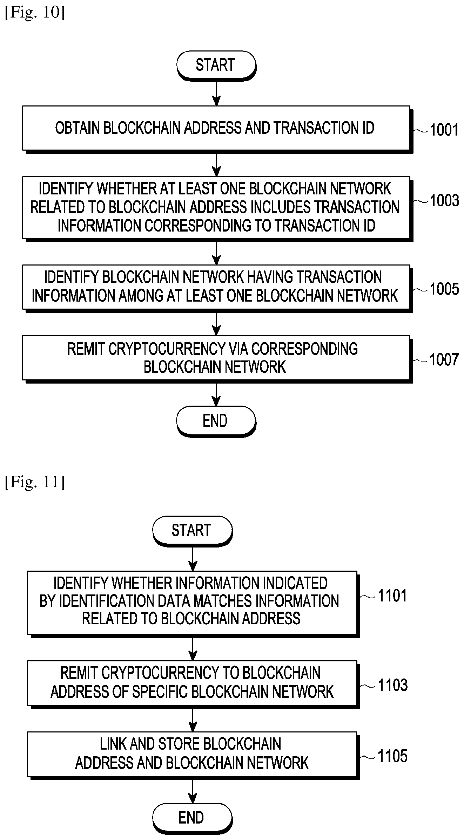

FIG. 10 is a flowchart illustrating an operation of remittance to a cryptocurrency account by a first electronic device according to an embodiment of the disclosure.

Referring to FIG. 10, in operation 1001, the first electronic device 201 may obtain a blockchain address (or account) and a transaction ID from the second electronic device 202.

According to an embodiment, in operation 1003, the first electronic device 201 may sequentially access at least one blockchain network related to the blockchain address (or account) and identify whether transaction information corresponding to the transaction ID exists in the at least one blockchain network. For example, the first electronic device 201 may identify the address type of the blockchain address (or account) and sequentially access at least one blockchain network related to the identified address type. The first electronic device 201 may sequentially identify whether the transaction information corresponding to the transaction ID exists in the at least one blockchain network.

According to an embodiment, when the message received through an external electronic device includes information designating a blockchain network, the first electronic device 201 may first access the designated blockchain network and identify whether the transaction information corresponding to the transaction ID exists in the blockchain network.

According to an embodiment, in operation 1005, the first electronic device 201 may identify the blockchain network that has the transaction information among at least one blockchain network.

According to an embodiment, in operation 1007, the first electronic device 201 may transmit cryptocurrency to the blockchain address (or account) through the blockchain network. The first electronic device 201 may display a notification to receive a confirmation as to whether to transmit cryptocurrency to the blockchain address (or account) through the blockchain network. In this case, the first electronic device 201 may transmit cryptocurrency to the blockchain address (or account) through the blockchain network according to a user input responsive to the displayed notification.

FIG. 11 is a flowchart illustrating a method for storing a cryptocurrency account by a first electronic device according to an embodiment of the disclosure.

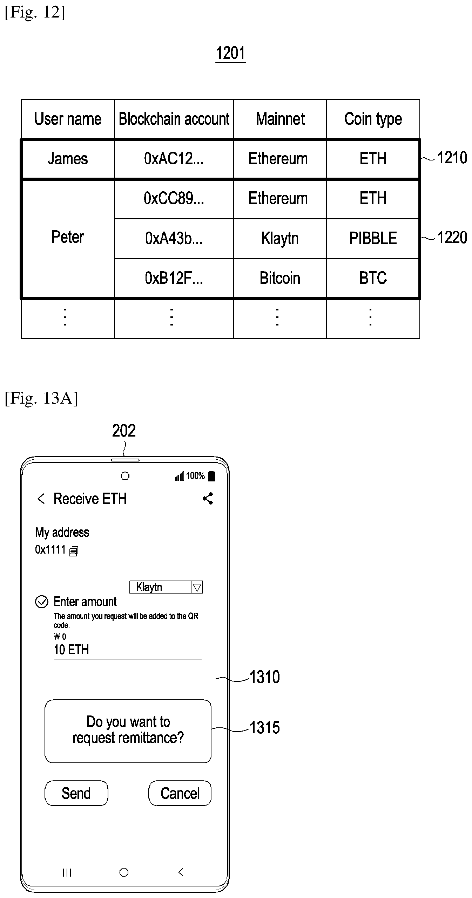

FIG. 12 is a view illustrating a method for storing a cryptocurrency account by a first electronic device according to an embodiment of the disclosure.

Referring to FIG. 11, in operation 1101, the first electronic device 201 may identify whether the information indicated by the identification data matches the information related to the blockchain address (or account).

According to an embodiment, in operation 1103, when the information indicated by the identification data matches the information related to the blockchain address (or account), the first electronic device 201 may transmit cryptocurrency to the blockchain address (or account) of the blockchain network.

According to an embodiment, in operation 1105, the first electronic device 201 may store the blockchain address (or account) where the remittance of cryptocurrency has been completed, with the blockchain address (or account) linked to the blockchain network.

According to an embodiment, referring to FIG. 12, the first electronic device 201 may store the blockchain address (or account) in a memory (e.g., the memory 230 of FIG. 2), with the blockchain address (or account) linked to the blockchain network (or mainnet) as shown in a table 1201. For example, the first electronic device 201 may store the user's name and the user's blockchain address (or account), with them linked to the blockchain network. The first electronic device 201 may also store the coin type of the blockchain address (or account), with it linked to the blockchain network. For example, the first electronic device 201 may store information 1210 about a first user and information 1220 about a second user. For example, the information about the user may include a name (e.g., James or Peter) or an identity, e.g., social ID number. For example, when remittance to the blockchain address (or account) for the first user is completed via an 'Ethereum' network, the first electronic device 201 may store the blockchain address (or account), with the blockchain address (or account) linked to the 'Ethereum' network. When remittances to blockchain addresses (or accounts) for the second user are individually completed through an 'Ethereum' network, a 'Klaytn' network, and a 'Bitcoin' network, the first electronic device 201 may store the blockchain addresses (or accounts), with the blockchain addresses (or accounts) linked to their respective corresponding networks. The text shown in FIG. 12 is merely an example, and the disclosure is not limited thereto.

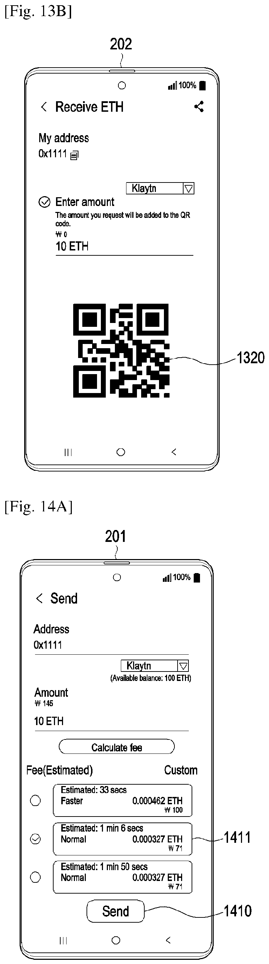

FIGS. 13A and 13B are views illustrating an operation in which a second electronic device requests remittance to a cryptocurrency account according to various embodiments of the disclosure.

Referring to FIGS. 13A and 13B, the second electronic device 202 may generate a message to request remittance of cryptocurrency to the first electronic device 201.

Referring to FIG. 13A, the second electronic device 202 may display a first screen 1310 for generating the message to request remittance. The first screen 1310 may include information for a blockchain address (or account) (e.g., "0x1111"), identification (transaction ID or block number), and an authentication value (or hash value). The first screen 1310 may include a notification window 1315 indicating the operation of remittance request. When a user input for "send" is received, the second electronic device 202 may generate a message including at least one of the blockchain address (or account) (e.g., "0x1111"), identification data (transaction ID or block number), and authentication value (or hash value) and transmit the message to the first electronic device 201.

According to an embodiment, the second electronic device 202 may receive information for the blockchain network after the first screen 1310 is displayed and add the received blockchain network information to the message. Alternatively, after the first screen 1310 is displayed, the second electronic device 202 may add previously stored blockchain network information (e.g., "Klaytn") or may add information for the blockchain network according to a user input. The second electronic device 202 may add data the message or exclude some data from the message. For example, the second electronic device 202 may include information about the amount requested for remittance to the blockchain address (or account) in the message. When a user input for "cancel" is received, the second electronic device 202 may cancel the transmission of the message.

Referring to FIG. 13B, when a user input for a first object is received, the second electronic device 202 may generate a message including at least one of the blockchain address (or account) (e.g., "0x1111"), identification data (transaction ID or block number), and authentication value. For example, the message may be displayed as QR (Quick Response) code-type data 1320. However, the QR code-type data 1320 shown in FIG. 13B is merely an example of the data included in the message and the disclosure is not limited thereto.

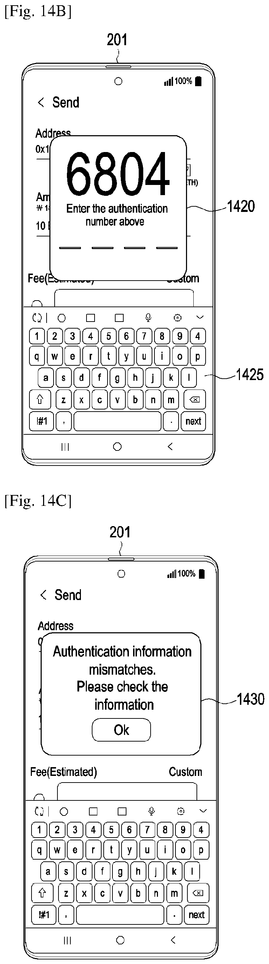

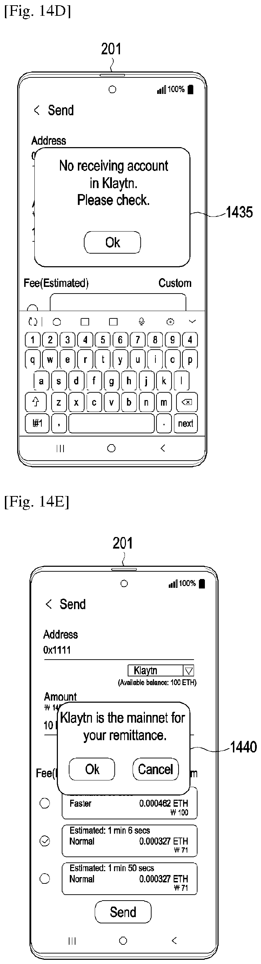

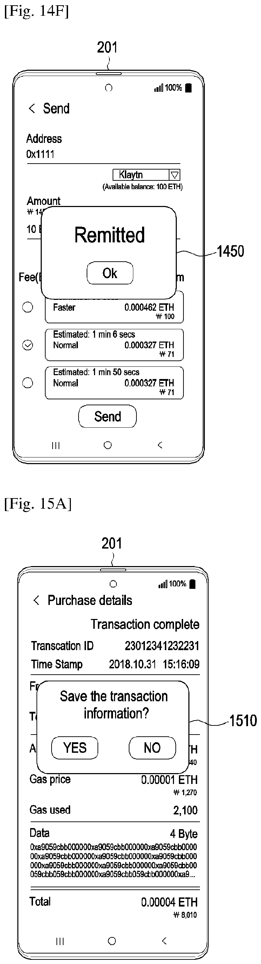

FIGS. 14A, 14B, 14C, 14D, 14E, and 14F are views illustrating an operation in which a first electronic device sends cryptocurrency according to various embodiments of the disclosure.

Referring to FIGS. 14A to 14F, the first electronic device 201 may receive a message generated by a second electronic device (e.g., the second electronic device 202 of FIG. 2).

Referring to FIG. 14A, the first electronic device 201 may display a second screen 1410 for remittance of cryptocurrency. The second screen 1410 may display information 1411 including the blockchain address (or account) and the amount of cryptocurrency to be remitted included in the message received from the second electronic device 202. The first electronic device 201 may start remittance of cryptocurrency in response to a user input for a "send" object.

Referring to FIG. 14B, the first electronic device 201 may generate a first value for identifying the blockchain network (or mainnet) before remitting cryptocurrency. The first electronic device 201 may display an authentication window 1420 to induce the user to input the generated first value (e.g., '6804'). The first electronic device 201 may display an input window 1425 for entering an authentication number to the authentication window 1420. For example, the input window 1425 shown in FIG. 14B is merely an example, and the type of the input window 1425 is not limited thereto. For example, the input window 1425 may be implemented as a security keypad. The first electronic device 201 may receive the same value as the first value to the authentication window 1420 through the input window 1425.

Referring to FIG. 14C, the first electronic device 201 may display a first notification window 1430 when the value input by the user does not match the generated first value. For example, the first notification window 1430 may be displayed as a pop-up window, and a warning vibration or sound may be output together with the display of the first notification window 1430. For example, the first notification window 1430 may include information indicating that authentication information is not matched.

Referring to FIG. 14D, when the value input by the user matches the generated first value, but the first value does not match the authentication value included in the message, the first electronic device 201 may display a second notification window 1435. For example, the second notification window 1435 may be displayed as a pop-up window, and a warning vibration or sound may be output together with the display of the second notification window 1435. For example, the second notification window 1435 may include information indicating that the account of the reception side account does not (effectively) exist in the input network.

Referring to FIG. 14D, when the value input by the user matches the generated first value, and the first value matches the authentication value included in the message, the first electronic device 201 may display a third notification window 1440. For example, the third notification window 1440 may include information that induces the user to finally identify the blockchain network (or mainnet).

Referring to FIG. 14E, in response to a user input corresponding to an "ok" object in the third notification window 1440, the first electronic device 201 may transmit cryptocurrency and display a fourth notification window 1450. For example, the fourth notification window 1450 may include information indicating completion of remittance.

According to an embodiment, the first electronic device 201 may perform the remittance operation without displaying the authentication window 1420. For example, after displaying the second screen 1410, the first electronic device 201 may analyze the message received from the second electronic device 202 and, according to a result of the analysis, display the notification window of FIG. 14C or 14D.

For example, the first electronic device 201 may obtain a transaction object (or tx object) corresponding to identification data (e.g., tx id) included in the message from a node of the blockchain network. Alternatively, the first electronic device 201 may obtain the value of the time of generation of the latest block and the latest block number included in the message from the node of the blockchain network. The first electronic device 201 may compare a value obtained by hashing the transaction object (or latest block number and the time of generation of the latest block) and the blockchain address included in the message with the hash value included in the message. When the hashed value and the hash value included in the message are the same, the first electronic device 201 may determine that the address of the reception side included in the message effectively exists in the blockchain network. According to an embodiment, when the address of the reception side does not effectively exist in the network included in the message received from the second electronic device 202 or the network input by the user, the first electronic device 201 may display the second notification window 1435. Alternatively, when the address of the reception side effectively exists in the network included in the message received from the second electronic device 202 or the network input by the user, the first electronic device 201 may display the third notification window 1440. In this case, in response to a user input corresponding to an "ok" object in the third notification window 1440, the first electronic device 201 may transmit cryptocurrency and display a fourth notification window 1450.

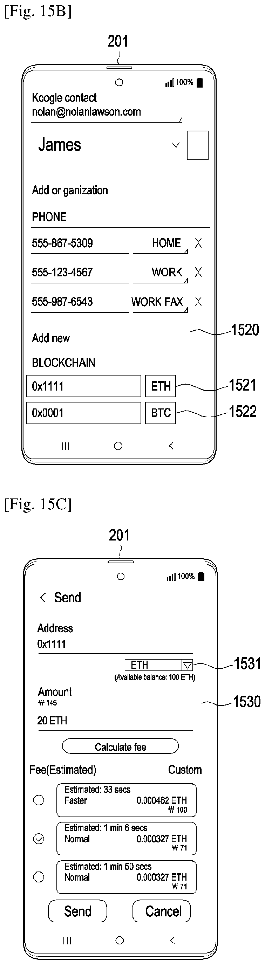

FIGS. 15A, 15B, and 15C are views illustrating a method for storing a cryptocurrency account, where remittance has been done, by a first electronic device according to various embodiments of the disclosure.

Referring to FIGS. 15A to 15C, the first electronic device 201 may complete remittance of cryptocurrency to the blockchain address (or account) requested by a second electronic device (e.g., the second electronic device 202 of FIG. 2) through a specific blockchain network.

Referring to FIG. 15A, the first electronic device 201 may display a fifth notification window 1510 when the remittance of cryptocurrency is completed. In this case, the fifth notification window 1510 may include information for identifying whether to store transaction complete-related information (e.g., information about the remittance of cryptocurrency).

Referring to FIG. 15B, the first electronic device 201 may store the blockchain address (or account) to which the cryptocurrency has been remitted, with the blockchain address (or account) linked to the blockchain network, in response to a user input corresponding to "yes" in the fifth notification window 1510. The first electronic device 201 may link the blockchain address (or account) and the blockchain network to a user information screen 1520 and display the stored information. For example, in the user information screen 1520 for the first user (e.g., "James"), the first electronic device 201 may link the "0x1 111" account to an Ethereum network 1521 and store the same and may link the "0x0001" account to a bitcoin network 1522 and store the same.

Referring to FIG. 15C, when an input for selecting the "0x1111" object is received in the user information screen 1520 for the first user (e.g., "James"), the first electronic device 201 may display a third screen 1530 in which the "0x1111" address is linked to the Ethereum network 1531. The first electronic device 201 may automatically link the "0x1111" account to the Ethereum network 1531 where the remittance has previously been completed, providing user convenience.

According to an embodiment, an electronic device comprises a memory, a communication circuit, and a processor configured to receive a message including a blockchain address corresponding to a blockchain account and an identifier corresponding to at least one blockchain transaction related to the blockchain address, using the communication circuit from an external electronic device, obtain blockchain transaction information related to the identifier from a node included in a blockchain network related to the blockchain address using the communication circuit, based on a request for remitting cryptocurrency to the blockchain address, when the blockchain transaction information obtained from the node corresponds to the blockchain address, remit the cryptocurrency to the blockchain address via the blockchain network, using the communication circuit and, when the blockchain transaction information obtained from the node does not correspond to the blockchain address, refrain from remitting the cryptocurrency to the blockchain address via the blockchain network.

The processor may be configured to, when blockchain transaction information related to the identifier is not obtained from another node included in another blockchain network based on the request, refrain from remitting the cryptocurrency via the other blockchain network.

The processor may be configured to receive a first authentication value used to identify a blockchain network effectively having the blockchain address, as part of the message, from the external electronic device. The first authentication value may be generated by the external electronic device based on information regarding the at least one blockchain transaction corresponding to the identifier and the blockchain address.

The processor may be configured to generate a second authentication value using the blockchain transaction information obtained from the node and determine whether to remit the cryptocurrency based on a result of comparison between the first authentication value and the second authentication value.

The processor may be configured to remit the cryptocurrency when the second authentication value corresponds to the first authentication value and refrain from remitting the cryptocurrency when the second authentication value does not correspond to the first authentication value.

The processor may be configured to, when the second authentication value does not correspond to the first authentication value, provide a notification for requesting to identify whether to remit the cryptocurrency to the blockchain network via a display.

The processor may be configured to generate at least part of a value obtained by hashing the blockchain transaction information as the second authentication value.

The blockchain transaction information may include another identifier corresponding to at least one blockchain transaction stored in the node and another blockchain address corresponding to the node. The processor may be configured to perform the hashing using the other blockchain address and the other identifier.

The identifier may include a transaction identifier indicating a blockchain transaction related to the blockchain address or a block identifier indicating a latest block including a plurality of blockchain transactions related to the blockchain address.

According to an embodiment, a method for operating an electronic device comprises receiving a message including a blockchain address corresponding to a blockchain account and an identifier corresponding to at least one blockchain transaction related to the blockchain address, from an external electronic device, obtaining blockchain transaction information related to the identifier from a node included in a blockchain network related to the blockchain address, based on a request for remitting cryptocurrency to the blockchain address, when the blockchain transaction information obtained from the node corresponds to the blockchain address, remitting the cryptocurrency to the blockchain address via the blockchain network and, when the blockchain transaction information obtained from the node does not correspond to the blockchain address, refraining from remitting the cryptocurrency to the blockchain address via the blockchain network.

The method may further comprise, when blockchain transaction information related to the identifier is not obtained from another node included in another blockchain network based on the request, refraining from remitting the cryptocurrency via the other blockchain network.

Receiving the message may include receiving a first authentication value used to identify a blockchain network effectively having the blockchain address, as part of the message, from the external electronic device. The first authentication value may be generated by the external electronic device based on information regarding the at least one blockchain transaction corresponding to the identifier and the blockchain address.

The method may further comprise generating a second authentication value using the blockchain transaction information obtained from the node and determining whether to remit the cryptocurrency based on a result of comparison between the first authentication value and the second authentication value.

Determining whether to remit the cryptocurrency may include remitting the cryptocurrency when the second authentication value corresponds to the first authentication value and refraining from remitting the cryptocurrency when the second authentication value does not correspond to the first authentication value.

Determining whether to remit the cryptocurrency may include, when the second authentication value does not correspond to the first authentication value, providing a notification for requesting to identify whether to remit the cryptocurrency to the blockchain network via a display.

Generating the second authentication value may include generating at least part of a value obtained by hashing the blockchain transaction information as the second authentication value.

The blockchain transaction information may include another identifier corresponding to at least one blockchain transaction stored in the node and another blockchain address corresponding to the node. Generating the second authentication value may include performing the hashing using the other blockchain address and the other identifier.

The identifier may include a transaction identifier indicating a blockchain transaction related to the blockchain address or a block identifier indicating a latest block including a plurality of blockchain transactions related to the blockchain address.

The message may include a SMS message.

According to an embodiment, there is provided a computer-readable, non-transitory recording medium storing instructions performing receiving a message including a blockchain address corresponding to a blockchain account and an identifier corresponding to at least one blockchain transaction related to the blockchain address, from an external electronic device, obtaining blockchain transaction information related to the identifier from a node included in a blockchain network related to the blockchain address, based on a request for remitting cryptocurrency to the blockchain address, when the blockchain transaction information obtained from the node corresponds to the blockchain address, remitting the cryptocurrency to the blockchain address via the blockchain network and, when the blockchain transaction information obtained from the node does not correspond to the blockchain address, refraining from remitting the cryptocurrency to the blockchain address via the blockchain network.

Each of the aforementioned components of the electronic device may include one or more parts, and a name of the part may vary with a type of the electronic device. The electronic device in accordance with various embodiments of the disclosure may include at least one of the aforementioned components, omit some of them, or include other additional component(s). Some of the components may be combined into an entity, but the entity may perform the same functions as the components may do.

While the disclosure has been shown and described with reference to various embodiments thereof, it will be understood by those skilled in the art that various changes in form and details may be made therein without departing from the scope of the disclosure as defined by the appended claims.

## Claims

1. An electronic device, comprising:
a memory;
a communication circuit; anda processor,
wherein the memory stores instructions which, when executed, cause the processor to:
receive a message, using the communication circuit, from an external electronic device, the message including a blockchain address corresponding to a blockchain account and an identifier corresponding to at least one blockchain transaction related to the blockchain address,
obtain blockchain transaction information related to the identifier from a node included in a blockchain network related to the blockchain address, using the communication circuit, based on a request for remitting cryptocurrency to the blockchain address,
when the blockchain transaction information obtained from the node corresponds to the blockchain address, remit the cryptocurrency to the blockchain address via the blockchain network, using the communication circuit, and
when the blockchain transaction information obtained from the node does not correspond to the blockchain address, refrain from remitting the cryptocurrency to the blockchain address via the blockchain network.

2. The electronic device of claim 1, wherein the instructions are further configured to cause the processor to, when blockchain transaction information related to the identifier is not obtained from another node included in another blockchain network based on the request, refrain from remitting the cryptocurrency via the other blockchain network.

3. The electronic device of claim 1,
wherein the instructions are further configured to cause the processor to receive a first authentication value used to identify a blockchain network effectively having the blockchain address, as part of the message, from the external electronic device, and
wherein the first authentication value is generated by the external electronic device based on information regarding the at least one blockchain transaction corresponding to the identifier and the blockchain address.

4. The electronic device of claim 3, wherein the instructions are further configured to cause the processor to:
generate a second authentication value using the blockchain transaction information obtained from the node, and
determine whether to remit the cryptocurrency based on a result of comparison between the first authentication value and the second authentication value.

5. The electronic device of claim 4, wherein the instructions are further configured to cause the processor to:
remit the cryptocurrency when the second authentication value corresponds to the first authentication value, and
refrain from remitting the cryptocurrency when the second authentication value does not correspond to the first authentication value.

6. The electronic device of claim 5, wherein the instructions are further configured to cause the processor to, when the second authentication value does not correspond to the first authentication value, provide a notification for requesting to identify whether to remit the cryptocurrency to the blockchain network via a display.

7. The electronic device of claim 4, wherein the instructions are further configured to cause the processor to generate at least part of a value obtained by hashing the blockchain transaction information as the second authentication value.

8. The electronic device of claim 7,
wherein the blockchain transaction information includes another identifier corresponding to at least one blockchain transaction stored in the node and another blockchain address corresponding to the node, and
wherein the instructions are further configured to cause the processor to perform the hashing using the other blockchain address and the other identifier.

9. The electronic device of claim 1, wherein the identifier includes a transaction identifier indicating a blockchain transaction related to the blockchain address or a block identifier indicating a latest block including a plurality of blockchain transactions related to the blockchain address.

10. A method executed by an electronic device, the method comprising:
receiving a message from an external electronic device, the message including a blockchain address corresponding to a blockchain account and an identifier corresponding to at least one blockchain transaction related to the blockchain address;
obtaining blockchain transaction information related to the identifier from a node included in a blockchain network related to the blockchain address, based on a request for remitting cryptocurrency to the blockchain address;
when the blockchain transaction information obtained from the node corresponds to the blockchain address, remitting the cryptocurrency to the blockchain address via the blockchain network; and
when the blockchain transaction information obtained from the node does not correspond to the blockchain address, refraining from remitting the cryptocurrency to the blockchain address via the blockchain network.

11. The method of claim 10, further comprising, when blockchain transaction information related to the identifier is not obtained from another node included in another blockchain network based on the request, refraining from remitting the cryptocurrency via the other blockchain network.

12. The method of claim 10,
wherein receiving the message includes receiving a first authentication value used to identify a blockchain network effectively having the blockchain address, as part of the message, from the external electronic device, and
wherein the first authentication value is generated by the external electronic device based on information regarding the at least one blockchain transaction corresponding to the identifier and the blockchain address.

13. The method of claim 12, further comprising:
generating a second authentication value using the blockchain transaction information obtained from the node; and
determining whether to remit the cryptocurrency based on a result of comparison between the first authentication value and the second authentication value.

14. The method of claim 13, wherein determining whether to remit the cryptocurrency includes:
remitting the cryptocurrency when the second authentication value corresponds to the first authentication value; and
refraining from remitting the cryptocurrency when the second authentication value does not correspond to the first authentication value.

15. The method of claim 14, wherein determining whether to remit the cryptocurrency includes, when the second authentication value does not correspond to the first authentication value, providing a notification for requesting to identify whether to remit the cryptocurrency to the blockchain network via a display.

## Patentansprüche

1. Elektronische Vorrichtung, die Folgendes umfasst:
einen Speicher;
eine Kommunikationsschaltung; und einen Prozessor,
wobei der Speicher Instruktionen speichert, die, wenn sie ausgeführt werden, den Prozessor zu Folgendem veranlassen:
unter Verwendung der Kommunikationsschaltung eine Nachricht von einer externen elektronischen Vorrichtung zu empfangen, wobei die Nachricht eine Blockchain-Adresse, die einem Blockchain-Konto entspricht, und eine Kennung enthält, die mindestens einer Blockchain-Transaktion entspricht, die sich auf die Blockchain-Adresse bezieht,
Blockchain-Transaktionsinformationen, die sich auf die Kennung beziehen, von einem Knoten, der in einem Blockchain-Netzwerk enthalten ist, das sich auf die Blockchain-Adresse bezieht, unter Verwendung der Kommunikationsschaltung basierend auf einer Anforderung zur Überweisung von Kryptowährung an die Blockchain-Adresse zu erhalten,
wenn die von dem Knoten erhaltene Blockchain-Transaktionsinformation der Blockchain-Adresse entspricht, die Kryptowährung über das Blockchain-Netzwerk unter Verwendung der Kommunikationsschaltung an die Blockchain-Adresse zu überweisen, und
wenn die vom Knoten erhaltenen Blockchain-Transaktionsinformationen nicht der Blockchain-Adresse entsprechen, die Überweisung der Kryptowährung an die Blockchain-Adresse über das Blockchain-Netzwerk zu unterlassen.

2. Elektronische Vorrichtung nach Anspruch 1, wobei die Instruktionen ferner so konfiguriert sind, dass sie den Prozessor veranlassen, die Überweisung der Kryptowährung über das andere Blockchain-Netzwerk zu unterlassen, wenn Blockchain-Transaktionsinformationen, die sich auf die Kennung beziehen, basierend auf der Anforderung nicht von einem anderen Knoten erhalten werden, der in einem anderen Blockchain-Netzwerk enthalten ist.

3. Elektronische Vorrichtung nach Anspruch 1,
wobei die Instruktionen weiter konfiguriert sind, um den Prozessor zu veranlassen, einen ersten Authentifizierungswert, der verwendet wird, um ein Blockchain-Netzwerk zu identifizieren, das tatsächlich die Blockchain-Adresse aufweist, als Teil der Nachricht von der externen elektronischen Vorrichtung zu empfangen, und
wobei der erste Authentifizierungswert von der externen elektronischen Vorrichtung auf der Grundlage von Informationen, die sich auf die mindestens eine Blockchain-Transaktion beziehen, die der Kennung und der Blockchain-Adresse entspricht, erzeugt wird.

4. Elektronische Vorrichtung nach Anspruch 3, wobei die Instruktionen ferner so konfiguriert sind, dass sie den Prozessor dazu veranlassen:
einen zweiten Authentifizierungswert unter Verwendung der von dem Knoten erhaltenen Blockchain-Transaktionsinformationen zu erzeugen, und
zu bestimmen, ob die Kryptowährung auf der Grundlage eines Ergebnisses des Vergleichs zwischen dem ersten Authentifizierungswert und dem zweiten Authentifizierungswert überwiesen werden soll.

5. Elektronische Vorrichtung nach Anspruch 4, wobei die Instruktionen ferner so konfiguriert sind, dass sie den Prozessor dazu veranlassen:
die Kryptowährung zu überweisen, wenn der zweite Authentifizierungswert dem ersten Authentifizierungswert entspricht, und
die Überweisung der Kryptowährung zu unterlassen, wenn der zweite Authentifizierungswert nicht dem ersten Authentifizierungswert entspricht.

6. Elektronische Vorrichtung nach Anspruch 5, wobei die Instruktionen ferner so konfiguriert sind, dass sie den Prozessor veranlassen, wenn der zweite Authentifizierungswert nicht dem ersten Authentifizierungswert entspricht, über eine Anzeige eine Benachrichtigung zur Aufforderung bereitzustellen, zu identifizieren, ob die Kryptowährung an das Blockchain-Netzwerk überwiesen werden soll.

7. Elektronische Vorrichtung nach Anspruch 4, wobei die Instruktionen ferner so konfiguriert sind, dass sie den Prozessor veranlassen, zumindest einen Teil eines durch Hashing der Blockchain-Transaktionsinformationen erhaltenen Wertes als zweiten Authentifizierungswert zu erzeugen.

8. Elektronische Vorrichtung nach Anspruch 7,
wobei die Blockchain-Transaktionsinformationen eine andere Kennung, die mindestens einer in dem Knoten gespeicherten Blockchain-Transaktion entspricht, und eine andere Blockchain-Adresse, die dem Knoten entspricht, enthalten, und
wobei die Instruktionen ferner konfiguriert sind, um den Prozessor zu veranlassen, das Hashing unter Verwendung der anderen Blockchain-Adresse und der anderen Kennung durchzuführen.

9. Elektronische Vorrichtung nach Anspruch 1, wobei die Kennung eine Transaktionskennung, die eine sich auf die Blockchain-Adresse beziehende Blockchain-Transaktion anzeigt, oder eine Blockkennung, die einen letzten Block mit einer Vielzahl von sich auf die Blockchain-Adresse beziehenden Blockchain-Transaktionen anzeigt, umfasst.

10. Verfahren, das von einer elektronischen Vorrichtung ausgeführt wird, wobei das Verfahren umfasst:
Empfangen einer Nachricht von einer externen elektronischen Vorrichtung, wobei die Nachricht eine Blockchain-Adresse, die einem Blockchain-Konto entspricht, und eine Kennung enthält, die mindestens einer Blockchain-Transaktion entspricht, die sich auf die Blockchain-Adresse bezieht;
Erhalten von Blockchain-Transaktionsinformationen, die sich auf die Kennung beziehen, von einem Knoten, der in einem Blockchain-Netzwerk enthalten ist, das sich auf die Blockchain-Adresse bezieht, basierend auf einer Anforderung zur Überweisung von Kryptowährung an die Blockchain-Adresse;
wenn die von dem Knoten erhaltene Blockchain-Transaktionsinformation der Blockchain-Adresse entspricht, Überweisen der Kryptowährung an die Blockchain-Adresse über das Blockchain-Netzwerk; und
wenn die vom Knoten erhaltenen Blockchain-Transaktionsinformationen nicht der Blockchain-Adresse entsprechen, Unterlassen der Überweisung der Kryptowährung an die Blockchain-Adresse über das Blockchain-Netzwerk.

11. Verfahren nach Anspruch 10, das ferner umfasst, dass, wenn Blockchain-Transaktionsinformationen, die sich auf die Kennung beziehen, nicht von einem anderen Knoten, der in einem anderen Blockchain-Netzwerk enthalten ist, auf der Grundlage der Anforderung erhalten werden, die Überweisung der Kryptowährung über das andere Blockchain-Netzwerk unterlassen wird.

12. Verfahren nach Anspruch 10,
wobei das Empfangen der Nachricht das Empfangen eines ersten Authentifizierungswerts, der verwendet wird, um ein Blockchain-Netzwerk zu identifizieren, das die Blockchain-Adresse tatsächlich aufweist, als Teil der Nachricht von der externen elektronischen Vorrichtung umfasst, und
wobei der erste Authentifizierungswert von der externen elektronischen Vorrichtung auf der Grundlage von Informationen, die sich auf die mindestens eine Blockchain-Transaktion beziehen, die der Kennung und der Blockchain-Adresse entspricht, erzeugt wird.

13. Verfahren nach Anspruch 12, ferner umfassend
Erzeugen eines zweiten Authentifizierungswertes unter Verwendung der von dem Knoten erhaltenen Blockchain-Transaktionsinformationen; und
Bestimmen, ob die Kryptowährung überwiesen werden soll, auf der Grundlage eines Ergebnisses des Vergleichs zwischen dem ersten Authentifizierungswert und dem zweiten Authentifizierungswert.

14. Verfahren nach Anspruch 13, wobei das Bestimmen ob die Kryptowährung zu überweisen ist, umfasst:
Überweisen der Kryptowährung, wenn der zweite Authentifizierungswert dem ersten Authentifizierungswert entspricht; und
Unterlassen der Überweisung der Kryptowährung, wenn der zweite Authentifizierungswert nicht dem ersten Authentifizierungswert entspricht.

15. Verfahren nach Anspruch 14, wobei das Bestimmen, ob die Kryptowährung zu überweisen ist, umfasst, dass, wenn der zweite Authentifizierungswert nicht dem ersten Authentifizierungswert entspricht, eine Benachrichtigung zur Aufforderung, zu identifizieren, ob die Kryptowährung an das Blockchain-Netzwerk zu überweisen ist, über eine Anzeige bereitgestellt wird.

## Revendications

1. Dispositif électronique, comprenant :
une mémoire ;
un circuit de communication ; et un processeur,
dans lequel la mémoire stocke des instructions qui, lorsqu'elles sont exécutées, amènent le processeur à :
recevoir un message, à l'aide du circuit de communication, depuis un dispositif électronique externe, le message comprenant une adresse de chaîne de blocs correspondant à un compte de chaîne de blocs et un identifiant correspondant à au moins une transaction de chaîne de blocs liée à l'adresse de chaîne de blocs,
obtenir des informations sur les transactions de chaîne de blocs liées à l'identifiant à partir d'un noeud inclus dans un réseau de chaîne de blocs lié à l'adresse de chaîne de blocs, en utilisant le circuit de communication, sur la base d'une demande de remise de crypto-monnaie à l'adresse de chaîne de blocs,
lorsque les informations de transaction de chaîne de blocs obtenues depuis le noeud correspondent à l'adresse de chaîne de blocs, remettre la crypto-monnaie à l'adresse de chaîne de blocs via le réseau de chaîne de blocs, en utilisant le circuit de communication, et
lorsque les informations de transaction de chaîne de blocs obtenues depuis le noeud ne correspondent pas à l'adresse de chaîne de blocs, s'abstenir de remettre la crypto-monnaie à l'adresse de chaîne de blocs par l'intermédiaire du réseau de chaîne de blocs.

2. Dispositif électronique de la revendication 1, dans lequel les instructions sont en outre configurées pour amener le processeur, lorsque les informations de transaction de chaîne de blocs liées à l'identifiant ne sont pas obtenues d'un autre noeud inclus dans un autre réseau de chaîne de blocs sur la base de la demande, de s'abstenir de remettre la crypto-monnaie via l'autre réseau de chaîne de blocs.

3. Dispositif électronique de la revendication 1,
dans lequel les instructions sont en outre configurées pour amener le processeur à recevoir une première valeur d'authentification utilisée pour identifier un réseau de chaîne de blocs ayant effectivement l'adresse de chaîne de blocs, en tant que partie du message, en provenance du dispositif électronique externe, et.
dans lequel la première valeur d'authentification est générée par le dispositif électronique externe sur la base d'informations liées à l'au moins une transaction de chaîne de blocs correspondant à l'identifiant et à l'adresse de chaîne de blocs.

4. Dispositif électronique de la revendication 3, dans lequel les instructions sont en outre configurées pour amener le processeur à :
générer une deuxième valeur d'authentification à l'aide des informations de transaction de chaîne de blocs obtenues depuis le noeud, et
déterminer s'il convient de remettre la crypto-monnaie en fonction d'un résultat de la comparaison entre la première valeur d'authentification et la deuxième valeur d'authentification.

5. Dispositif électronique de la revendication 4, dans lequel les instructions sont en outre configurées pour amener le processeur à :
remettre la crypto-monnaie lorsque la deuxième valeur d'authentification correspond à la première valeur d'authentification, et
s'abstenir de remettre la crypto-monnaie lorsque la deuxième valeur d'authentification ne correspond pas à la première valeur d'authentification.

6. Dispositif électronique de la revendication 5, dans lequel les instructions sont en outre configurées pour amener le processeur, lorsque la deuxième valeur d'authentification ne correspond pas à la première valeur d'authentification, à fournir une notification pour demander d'identifier s'il faut remettre la crypto-monnaie au réseau de chaîne de blocs via un affichage.

7. Dispositif électronique de la revendication 4, dans lequel les instructions sont en outre configurées pour amener le processeur à générer au moins une partie d'une valeur obtenue par hachage des informations de transaction de chaîne de blocs en tant que deuxième valeur d'authentification.

8. Dispositif électronique de la revendication 7,
dans lequel les informations de transaction de chaîne de blocs comprennent un autre identifiant correspondant à au moins une transaction de chaîne de blocs stockée dans le noeud et une autre adresse de chaîne de blocs correspondant au noeud, et.
les instructions sont en outre configurées pour amener le processeur à effectuer le hachage à l'aide de l'autre adresse de chaîne de blocs et de l'autre identifiant.

9. Dispositif électronique de la revendication 1, dans lequel l'identifiant comprend un identifiant de transaction indiquant une transaction de chaîne de blocs liée à l'adresse de chaîne de blocs ou un identifiant de bloc indiquant un dernier bloc comprenant une pluralité de transactions de chaîne de blocs liées à l'adresse de chaîne de blocs.

10. Procédé exécuté par un dispositif électronique, le procédé comprenant :
recevoir un message depuis un dispositif électronique externe, le message comprenant une adresse de chaîne de blocs correspondant à un compte de chaîne de blocs et un identifiant correspondant à au moins une transaction de chaîne de blocs liée à l'adresse de chaîne de blocs ;
obtenir des informations de transaction de chaîne de blocs liées à l'identifiant depuis un noeud inclus dans un réseau de chaîne de blocs lié à l'adresse de chaîne de blocs, sur la base d'une demande de remise de crypto-monnaie à l'adresse de chaîne de blocs ;
lorsque les informations de transaction de chaîne de blocs obtenues depuis le noeud correspondent à l'adresse de chaîne de blocs, remettre la crypto-monnaie à l'adresse de chaîne de blocs via le réseau de chaîne de blocs ; et
lorsque les informations de transaction de chaîne de blocs obtenues depuis le noeud ne correspondent pas à l'adresse de chaîne de blocs, s'abstenir de remettre la crypto-monnaie à l'adresse de chaîne de blocs par l'intermédiaire du réseau de chaîne de blocs.

11. Procédé de la revendication 10, comprenant en outre, lorsque les informations de transaction de chaîne de blocs liées à l'identifiant ne sont pas obtenues depuis un autre noeud inclus dans un autre réseau de chaîne de blocs sur la base de la demande, le fait de s'abstenir de remettre la crypto-monnaie via l'autre réseau de chaîne de blocs.

12. Procédé de la revendication 10,
dans lequel la réception du message comprend la réception d'une première valeur d'authentification utilisée pour identifier un réseau de chaîne de blocs ayant effectivement l'adresse de chaîne de blocs, en tant que partie du message, à partir du dispositif électronique externe, et.
dans lequel la première valeur d'authentification est générée par le dispositif électronique externe sur la base d'informations liées à l'au moins une transaction de chaîne de blocs correspondant à l'identifiant et à l'adresse de chaîne de blocs.

13. Procédé de la revendication 12, comprenant en outre :
générer une deuxième valeur d'authentification à l'aide des informations de transaction de chaîne de blocs obtenues depuis le noeud ; et
déterminer s'il convient de remettre la crypto-monnaie en fonction d'un résultat de la comparaison entre la première valeur d'authentification et la deuxième valeur d'authentification.

14. Procédé de la revendication 13, dans lequel déterminer s'il faut remettre la crypto-monnaie comprend :
remettre la crypto-monnaie lorsque la deuxième valeur d'authentification correspond à la première valeur d'authentification ; et
s'abstenir de remettre la crypto-monnaie lorsque la deuxième valeur d'authentification ne correspond pas à la première valeur d'authentification.

15. Procédé de la revendication 14, dans lequel déterminer s'il faut remettre la crypto-monnaie comprend, lorsque la deuxième valeur d'authentification ne correspond pas à la première valeur d'authentification, la fourniture d'une notification pour demander d'identifier s'il faut remettre la crypto-monnaie au réseau de chaîne de blocs par l'intermédiaire d'un affichage.
